# EUROPEAN PATENT APPLICATION

(11) **EP 4 286 695 A1**
(43) Date of publication of application: **06.12.2023**
(21) Application number: 23176842.5
(22) Date of filing: 01.06.2023
(51) Int. Cl.: F16B 5/02, F16B 37/04

(54) **SLIDING NUT**

(30) Priority: 02.06.2022 IN 202241031670; 23.09.2022 US 202217951537
(71) Applicant: Rohr, Inc., Chula Vista, CA 91910-2098 (US)
(72) Inventor: JAGADEESH, Satish Tumkur, Bangalore (IN); MANOHARA, Raghunandan, Bangalore (IN)
(74) Representative: Dehns

(57) **Abstract**

A workpiece having a hole formed therein including a sliding nut assembly (100) is disclosed herein. The sliding nut assembly includes a base plate (102) having a top surface, a first portion, and a second portion disposed adjacent the first portion, the first portion receives a first fastener (120) to secure the base plate to the workpiece, the second portion having a first elongated hole (106) and a second elongated hole (108) disposed adjacent the first elongated hole, a nut plate (112) disposed over the base plate, the nut plate having a first hole and a second hole disposed adjacent the first hole, the first hole disposed over the first elongated hole, and the second hole disposed over the second elongated hole, a nut (114) extending upward from the nut plate and over the first hole, and a fastener (116) extending through the second hole and second elongated hole securing the nut plate to the base plate.

## Description

### CROSS-REFERENCE TO RELATED APPLICATIONS

This application claims priority to, and the benefit of, India Patent Application No. 202241031670 (DAS CODE: 1EB0), filed June 2, 2022, and titled "SLIDING NUT," which is incorporated by reference herein in its entirety for all purposes.

### FIELD

The present disclosure generally relates mechanical fasteners, and more specifically, to nut plate and anchor nut fasteners.

### BACKGROUND

Existing systems and/or fasteners, including bolts and nuts, do not have a provision to accommodate deviation of hole location in two parts that are to be assembled. Process management and tolerances sometimes result in workpieces, or parts, with holes that are not aligned as designed. This results in the workpieces not being able to be joined as designed. In these scenarios, holes may be drilled to allow the parts to be joined. In other scenarios, the part may be replaced with another part having a hole that is aligned with the part to be joined to. Both are wasteful and time consuming. Furthermore, problems may occur after initial assembly and use such as during maintenance, replacing parts, etc.

### SUMMARY

Disclosed herein is a workpiece including a sliding nut assembly. The workpiece includes a hole formed therein. The sliding nut assembly includes a base plate having a top surface, a first portion, and a second portion disposed adjacent the first portion, the first portion configured to receive a first fastener to secure the base plate to the workpiece, the second portion having a first elongated hole and a second elongated hole disposed adjacent the first elongated hole, a nut plate disposed over the top surface of the base plate, the nut plate having a first hole and a second hole disposed adjacent the first hole, the first hole disposed over the first elongated hole, and the second hole disposed over the second elongated hole, a nut extending orthogonally upward from the nut plate and over the first hole, and a fastener extending through the second hole and second elongated hole securing the nut plate to the base plate.

In various embodiments, the sliding nut assembly of claim 1 further includes a removable washer coupled to the fastener, the removable washer being disposed on a bottom surface of the base plate, the bottom surface being opposite the top surface of the base plate. In various embodiments, the sliding nut assembly further includes a trench formed in the bottom surface of the base plate and around the second elongated hole, wherein the removable washer is disposed within the trench. In various embodiments, the removable washer secures the nut plate to the bottom plate preventing lateral translation of the nut plate with respect to the base plate.

In various embodiments, the fastener further comprises a top portion disposed above the nut plate and a bottom portion disposed below the base plate, the removable washer being disposed between the bottom portion and the base plate. In various embodiments, the base plate further comprises a third portion adjacent the second portion and opposite the first portion, the third portion configured to receive a fastener to secure the base plate to the workpiece and a third elongated hole adjacent the first elongated hole and opposite the second elongated hole in the second portion. In various embodiments, the nut plate further comprises a third hole adjacent the first hole and opposite the second hole, the third hole disposed over the third elongated hole.

Also disclosed herein is a sliding nut assembly. The sliding nut assembly includes a base plate having a top surface, a first elongated hole, and a second elongated hole disposed adjacent the first elongated hole, a nut plate disposed over the top surface of the base plate, the nut plate having a first hole and a second hole disposed adjacent the first hole, the first hole disposed over the first elongated hole, and the second hole disposed over the second elongated hole, a nut extending orthogonally upward from the nut plate and over the first hole, and a fastener extending through the second hole and second elongated hole securing the nut plate to the base plate.

In various embodiments, the sliding nut assembly further including a removable washer coupled to the fastener, the removable washer being disposed on a bottom surface of the base plate, the bottom surface being opposite the top surface of the base plate. In various embodiments, the sliding nut assembly further includes a trench formed in the bottom surface of the base plate and around the second elongated hole, wherein the removable washer is disposed within the trench. In various embodiments, the removable washer secures the nut plate to the bottom plate preventing lateral translation of the nut plate with respect to the base plate. In various embodiments, where removing the removable washer allows the nut plate to move with respect to the base plate.

In various embodiments, the sliding nut assembly further includes a top portion disposed above the nut plate and a bottom portion disposed below the base plate, the removable washer being disposed between the bottom portion and the base plate. In various embodiments, wherein the base plate further includes a first portion adjacent a second portion, the first portion configured to receive a fastener to secure the base plate to a workpiece and a third elongated hole adjacent the first elongated hole and opposite the second elongated hole, the first elongated hole, the second elongated hole, and the third elongated hole disposed in the second portion. In various embodiments, the nut plate further including a third hole adjacent the first hole and opposite the second hole, the third hole disposed over the third elongated hole.

Also disclosed herein is a sliding nut assembly. The sliding nut assembly includes a base plate having a top surface, an opposing bottom surface, a first elongated hole extending through the base plate, and a second elongated hole disposed adjacent the first elongated hole, the second elongated hole extending through the base plate, a nut plate disposed over the top surface of the base plate and having a first hole and a second hole, the first hole being aligned with the first elongated hole, and the second hole being aligned with the second elongated hole, a nut extending orthogonally from the nut plate and away from the top surface of the base plate, and a fastener securing the nut plate to the base plate, the fastener extending through the second hole and the second elongated hole.

In various embodiments, the sliding nut assembly further includes a removable washer disposed under the bottom surface of the base plate and coupled to the fastener, the removable washer preventing the nut plate from moving with respect to the base plate. In various embodiments, removing the removable washer allows the nut plate to move with respect to the base plate. In various embodiments, the base plate further includes a trench formed in the bottom surface of the base plate and around the second elongated hole, wherein the removable washer is disposed within the trench. In various embodiments, the fastener further includes a top portion disposed over the nut plate and a bottom portion disposed under the base plate, the removeable washer being disposed between the bottom portion and the base plate.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIGS. 1A, 1B, and 1C illustrate a sliding nut assembly, in accordance with various embodiments.
FIGS. 2A and 2B illustrate a sliding nut used for fastening two components, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

When two, or more, separate workpieces, or parts, are to be joined, each workpiece may include a hole that is intended to line up with a hole on the other workpiece(s). Generally, hole deviation tolerance is about 0.02 inches (0.05 cm) to about 0.03 inches (0.08 cm). Any deviation larger than 0.03 inches (0.08 cm) cannot accommodate a fastener in the holes to secure the workpieces to one another. This deviation in hole locations can cause problems during assembly, maintenance, and part replacement, among others. Disclosed herein is a sliding nut assembly for accommodating deviations of hole locations in two, or more, separate workpieces, or parts, that are larger than the current 0.03 inches (0.08 cm). The sliding nut assembly provides more freedom for a designer to have higher tolerances in hole location in workpieces for fastener installation. Further, this improves assembly and maintenance times. The sliding nut assembly disclosed herein may be made using aerospace approved materials or non-aerospace approved materials.

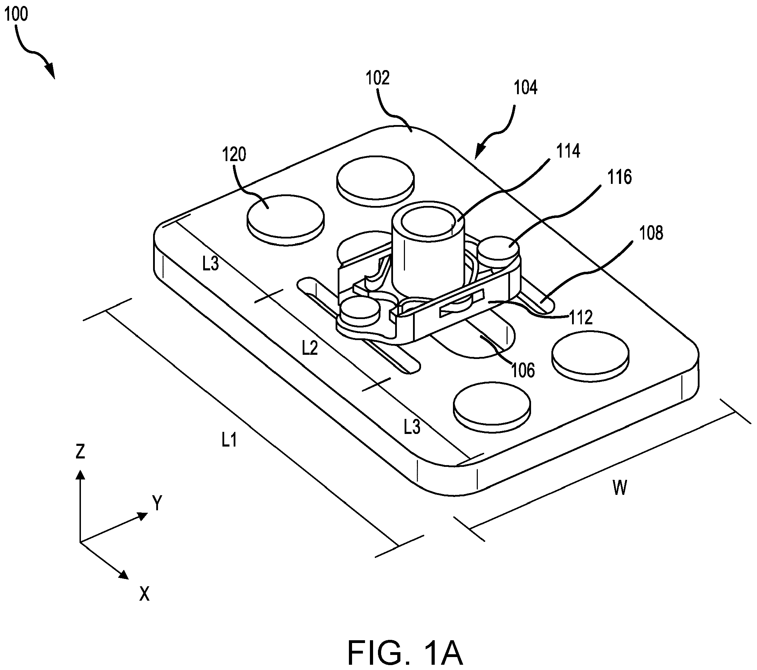

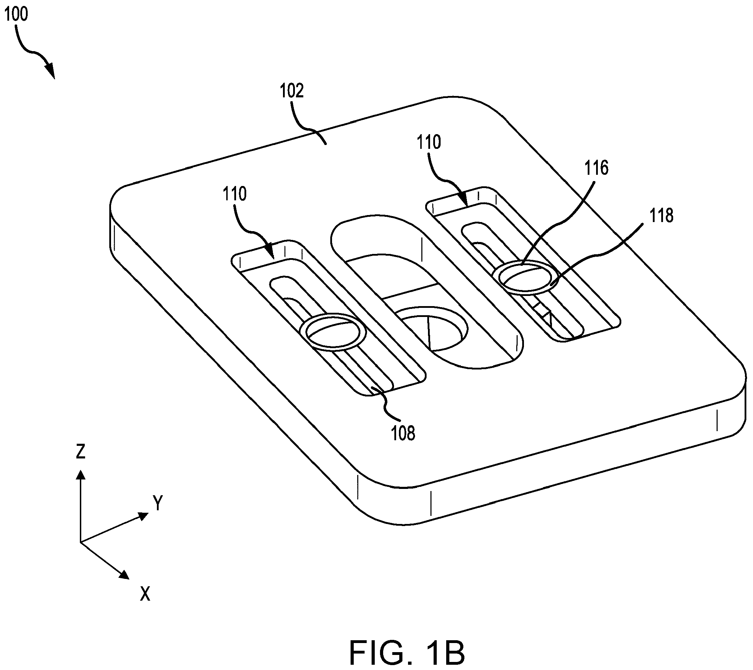

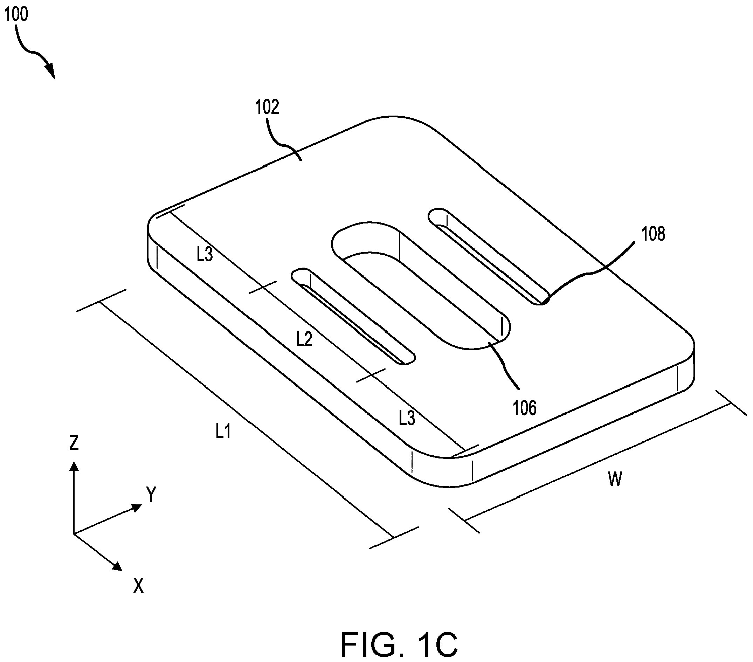

Referring to FIGS. 1A-1C, in accordance with various embodiments, a sliding nut assembly 100 is illustrated. FIG. Sliding nut assembly 100 may be made of any suitable material for the desired application. In various embodiments, sliding nut assembly 100 may be formed of aerospace approved materials aerospace applications. Sliding nut assembly 100 includes base plate 102 and sliding nut 104. FIG. 1A illustrates a perspective view from the top of sliding nut assembly 100 (e.g., the z-direction) including base plate 102 and sliding nut 104. FIGS. 1B illustrates a perspective view from the of a bottom sliding nut assembly 100 (e.g., the z-direction) including base plate 102 and sliding nut 104. FIG. 1C illustrates a perspective view from the top of base plate 102 (e.g., the z-direction). Base plate 102 has a width W (e.g., on the y-axis) and length L1 (e.g., on the x-axis) that is larger than width W. In various embodiments, more than one sliding nut 104 may be used with a single base plate 102. In such embodiments, width W may be larger than Length L1. Accordingly, length L1 and width W may be adjusted to fit the design needs for a specific use.

Base plate 102 includes an elongated bolt slot 106, elongated slots 108 on either side of bolt slot 106, and recesses 110. Slots 108 have a length L2 (e.g., on the x-axis) that is less than L1. In various embodiments, length L2 may be about 0.5 inches (1.3 cm) to about 5 inches (12.7 cm), and more specifically, about 0.75 inches (1.9 cm) to about 2 inches (5.1 cm). In various embodiments, length L2 may be larger or smaller. Slots 108 are centered in base plate 102 along Length L1 (e.g., on the x-axis) so that there is a length L3 (e.g., on the x-axis) on either side of slots 108. Length L3 is about one-half length L1 minus length L2. Base plate 102 may be sized to receive a fastener 120 to fasten base plate 102 to a workpiece such that length L3 is about twice the diameter of the fastener plus about 0.06 inches (0.15 cm). Fastener 120 may be a bolt, a rivet, a pin, a staple, or a screw, among others. This provides stability and support for sliding nut assembly 100, and more specifically, base plate 102. In various embodiments, base plate 102 may not be fastened to the workpiece. The workpiece may be wall plate, an anchor for a seat, a cabinet wall, a portion of a wing, a portion of a nacelle, or another piece of material that is to be fastened to another piece of material, among others.

Sliding nut 104 may be a two-lug nut or a single lug nut among others. As illustrated, sliding nut 104 is a two-lug nut. Sliding nut 104 includes a nut plate 112, a nut 114, fasteners 116, and washers 118. Nut plate 112 includes two holes, on either side, located over slots 108 through which fasteners 116 pass. One fastener 116 passes through nut plate 112 and one slot 108 on each side of bolt slot 106. Fasteners 116 may be rivets, pins, or bolts and nuts, among others. Fasteners 116 extend through slot 108 and out the backside of base plate 102.

Washer 118 is disposed between within recess 110 and between fastener 116 and base plate 102. Recess 110 may be sized to fit the type of fastener 116 to be used. That is, the width of recess 110 (e.g., the y-axis) and may be sized to fit the diameter of the head of fastener 116. Washer 118 is designed to be removeable from the assembled sliding nut assembly 100. In various embodiments, washer 118 may be made from plastic. In various embodiments, washer 118 may be made from a metal, a composite material, or rubber, among other materials. When installed, washer 118 provides structure and friction between fastener 116 and base plate 102 to prevent nut plate 112 from sliding within slots 108. However, washer 118 can be broken and removed, removing the friction from fastener 116, allowing nut plate 112 to slide back and forth (e.g., on the x-axis) within slot 108. This allows sliding nut assembly 100 to be used both when there is a deviation in hole alignment between two workpieces and when there is not a deviation in hole alignment between two work pieces.

In various embodiments, washer 118 may be an O-ring that may be removed without breaking the O-ring. In various embodiments, washer 118 may be a cotter pin or a safety pin that is removable without breaking. It should be appreciated that other materials and/or components may be used instead of washer 118 so long as they provide sufficient friction to prevent sliding nut 112 from sliding and are removable.

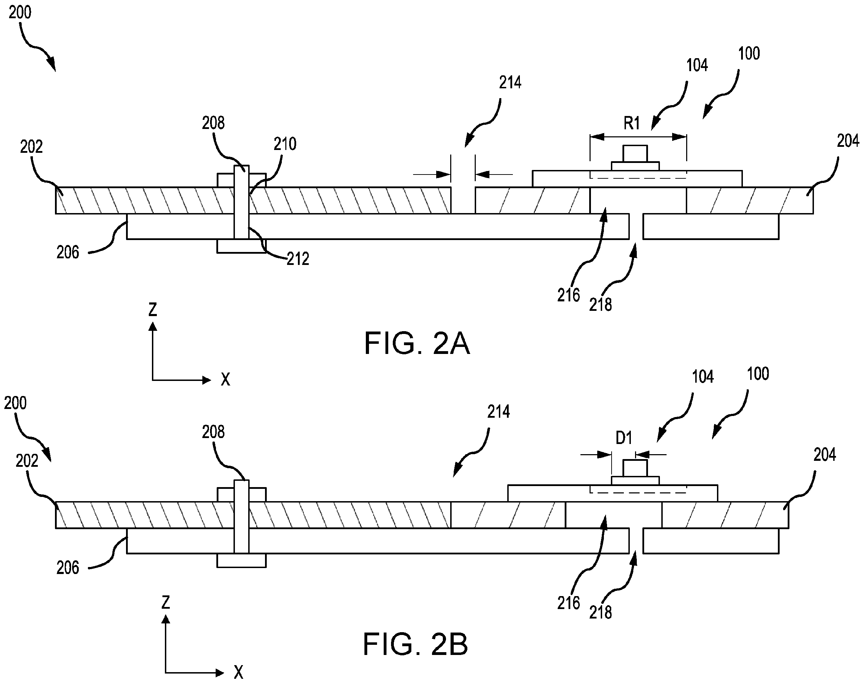

Referring now to FIGS. 2A and 2B, in accordance with various embodiments, a cross section view of a workpiece assembly 200 including a first workpiece 202 and a second workpiece 204 fastened to a third workpiece 206 is illustrated. As illustrated, first workpiece 202 is fastened to third workpiece 206 using a conventional fastener 208. Fastener 208 may be a rivet, a bolt, or a pin, among others. First workpiece 202 has a hole 210 and third workpiece 206 has a hole 212 that is aligned with hole 210. This alignment of hole 210 and hole 212 is within standard tolerances and allows fastener 208 to be used.

Second workpiece 204 is disposed next to first workpiece 202 with a gap 214 (e.g., in the x-axis) between first workpiece 202 and second workpiece 204. As illustrated, gap 214 may be designed to be about 0.5 inches (1.3 cm). In use, gap 214 may be larger or smaller according to design. Gap 214 may further be affected by differences in manufacture of first workpiece 202, second workpiece 204, and/or other workpieces in the overall design. When second workpiece 204 is placed as designed, gap 214 is about 0.5 inches (1.3 cm), as illustrated, and an elongated hole 216 in second workpiece 204 is aligned with a hole 218 in third workpiece 206. Elongated hole 216 may be designed to account for different tolerances in workpiece manufacture and alignment. In addition or in the alternative, elongated hole 216 may be designed to allow different fasteners to be used.

As illustrated in FIG. 2A, a conventional fastener, such as fastener 208, may be used to fasten second workpiece 204 to third workpiece 206 because hole 216 is aligned and centered with hole 218. However, as illustrated, sliding nut assembly 100, including a fastener (e.g., bolt, pin, etc.) is used to fasten second workpiece 204 to third workpiece 206 to account for potential variations in alignment of elongated hole 216 and hole 218. Sliding nut assembly 100, and more specifically sliding nut 104, has a range R1 of movement to account for variations in the alignment of elongated hole 216 and hole 218. Range R1 may be about 0.5 inches (1.3 cm) to about 2 inches (5.1 cm), and more specifically, about 0.75 inches (1.9 cm) to about 1.25 inches (3.2 cm). In various embodiments, range R1 may be larger than 2 inches (5.1 cm) to account for different design parameters. Range R1 allows for misalignment between elongated hole 216 and hole 218, where misalignment means that the center of elongated hole 216 is not aligned with the center of hole 218. Washers 118 may be left in place on sliding nut assembly 100 in this configuration because elongated hole 216 and hole 218 are aligned and sliding nut 104 is not shifted laterally (e.g., in the x-axis).

Referring now to FIG. 2B, first workpiece 202 is fastened to third workpiece 206 similar to FIG. 2A described above. However, second workpiece 204 is shifted laterally (e.g., the negative x-direction) toward first workpiece 202, removing gap 214, causing elongated hole 216 to not be aligned with hole 218. This lateral shift may be caused by placement of other workpieces, differences in manufacturing tolerances, or other factors. In addition or in the alternative, elongated hole 216 may be shifted laterally (e.g., along the x-axis) such that gap 214 is still present but elongated hole 216 and hole 218 are not aligned. Sliding nut assembly 100 allows sliding nut 104 to shift laterally (e.g., along the x-axis) to account for the misalignment of elongated hole 216 and hole 218. Sliding nut 104 shifts laterally (e.g., the x-direction) a distance D1 to align sliding nut assembly 100 with hole 218. Prior to shifting sliding nut 104 laterally, washers 118 are broken and removed, allowing sliding nut 104 to shift, or slide, to the correct position.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 10% of, within 5% of, within 1% of, within 0.1% of, and within 0.01% of a stated amount or value.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above described concepts can be used alone or in combination with any or all of the other above described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A workpiece including a sliding nut assembly, comprising:
the workpiece having a hole formed therein;
a base plate having a top surface, a first portion, and a second portion disposed adjacent the first portion, the first portion configured to receive a first fastener to secure the base plate to the workpiece, the second portion having a first elongated hole and a second elongated hole disposed adjacent the first elongated hole;
a nut plate disposed over the top surface of the base plate, the nut plate having a first hole and a second hole disposed adjacent the first hole, the first hole disposed over the first elongated hole, and the second hole disposed over the second elongated hole;
a nut extending orthogonally upward from the nut plate and over the first hole; and
a fastener extending through the second hole and second elongated hole securing the nut plate to the base plate.

2. The workpiece including a sliding nut assembly of claim 1, further comprising:
a removable washer coupled to the fastener, the removable washer being disposed on a bottom surface of the base plate, the bottom surface being opposite the top surface of the base plate.

3. The workpiece including a sliding nut assembly of claim 2, further comprising:
a trench formed in the bottom surface of the base plate and around the second elongated hole, wherein the removable washer is disposed within the trench.

4. The workpiece including a sliding nut assembly of claim 2 or 3, wherein the removable washer secures the nut plate to the bottom plate preventing lateral translation of the nut plate with respect to the base plate, and/or,
wherein the fastener further comprises:
a top portion disposed above the nut plate; and
a bottom portion disposed below the base plate, the removable washer being disposed between the bottom portion and the base plate.

5. The workpiece including a sliding nut assembly of any preceding claim, wherein the base plate further comprises:
a third portion adjacent the second portion and opposite the first portion, the third portion configured to receive a fastener to secure the base plate to the workpiece; and
a third elongated hole adjacent the first elongated hole and opposite the second elongated hole in the second portion.

6. A sliding nut assembly, comprising:
a base plate having a top surface, a first elongated hole, and a second elongated hole disposed adjacent the first elongated hole;
a nut plate disposed over the top surface of the base plate, the nut plate having a first hole and a second hole disposed adjacent the first hole, the first hole disposed over the first elongated hole, and the second hole disposed over the second elongated hole;
a nut extending orthogonally upward from the nut plate and over the first hole; and
a fastener extending through the second hole and second elongated hole securing the nut plate to the base plate.

7. The sliding nut assembly of claim 6, further comprising:
a removable washer coupled to the fastener, the removable washer being disposed on a bottom surface of the base plate, the bottom surface being opposite the top surface of the base plate.

8. The sliding nut assembly of claim 7, further comprising:
a trench formed in the bottom surface of the base plate and around the second elongated hole, wherein the removable washer is disposed within the trench, and/or,
wherein the removable washer secures the nut plate to the bottom plate preventing lateral translation of the nut plate with respect to the base plate.

9. The sliding nut assembly of claim 7 or 8, wherein removing the removable washer allows the nut plate to move with respect to the base plate, and/or,
wherein the fastener further comprises:
a top portion disposed above the nut plate; and
a bottom portion disposed below the base plate, the removable washer being disposed between the bottom portion and the base plate.

10. The sliding nut assembly of any of claims 6 to 9, wherein the base plate further comprises:
a first portion adjacent a second portion, the first portion configured to receive a fastener to secure the base plate to a workpiece; and
a third elongated hole adjacent the first elongated hole and opposite the second elongated hole, the first elongated hole, the second elongated hole, and the third elongated hole disposed in the second portion.

11. The sliding nut assembly of claim 10 or the workpiece including a sliding nut assembly of claim 5, wherein the nut plate further comprises:
a third hole adjacent the first hole and opposite the second hole, the third hole disposed over the third elongated hole.

12. A sliding nut assembly, comprising:
a base plate having a top surface, an opposing bottom surface, a first elongated hole extending through the base plate, and a second elongated hole disposed adjacent the first elongated hole, the second elongated hole extending through the base plate;
a nut plate disposed over the top surface of the base plate and having a first hole and a second hole, the first hole being aligned with the first elongated hole, and the second hole being aligned with the second elongated hole;
a nut extending orthogonally from the nut plate and away from the top surface of the base plate; and
a fastener securing the nut plate to the base plate, the fastener extending through the second hole and the second elongated hole.

13. The sliding nut assembly of claim 12, further comprising:
a removable washer disposed under the bottom surface of the base plate and coupled to the fastener, the removable washer preventing the nut plate from moving with respect to the base plate.

14. The sliding nut assembly of claim 13, wherein removing the removable washer allows the nut plate to move with respect to the base plate, and/or,
wherein the base plate further comprises:
a trench formed in the bottom surface of the base plate and around the second elongated hole, wherein the removable washer is disposed within the trench.

15. The sliding nut assembly of claim 13 or 14, wherein the fastener further comprises:
a top portion disposed over the nut plate; and
a bottom portion disposed under the base plate, the removeable washer being disposed between the bottom portion and the base plate.
